# EUROPEAN PATENT SPECIFICATION

(11) **EP 3 587 788 B1**
(45) Date of publication and mention of the grant of the patent: **19.05.2021**
(21) Application number: 18179549.3
(22) Date of filing: 25.06.2018
(51) Int. Cl.: F02M 55/02, F02M 61/16

(54) **METHOD FOR MANUFACTURING A COMMON RAIL**
VERFAHREN ZUR COMMON-RAIL-HERSTELLUNG
PROCÉDÉ DE FABRICATION D'UN RAIL COMMUN

(43) Date of publication of application: 01.01.2020
(73) Proprietor: Delphi Technologies IP Limited, Saint Michael (BB); Cengiz Makina San. Ve Tic. A.S., 41420 Cayirova Kocaeli (TR)
(72) Inventor: IYIUYARLAR, Bora, Cigli Izmir (TR); TUNCABOYLU, Tuna, Izmit Kocaeli (TR)
(74) Representative: BorgWarner France SAS

(56) References cited:
- EP-A1- 2 299 102
- WO-A1-2016/124660
- DE-A1-102010 030 286
- JP-A- 2001 020 828

## Description

### Technical field

The present invention relates to a method of manufacturing a common rail that is used in a fuel injection system of an internal combustion engine.

### Background of the Invention

It is known that diesel engines comprise a common rail fuel injection system with a high pressure fuel rail or common rail alimented with fuel by a high pressure pump. The common rail is usually made of steel and has an elongated tubular shape. The common rail serves as a pressure accumulator before the fuel is distributed to a plurality of solenoid actuated fuel injectors Document WO 2016/124660 A discloses a typical common rail.

The manufacturing process of the common rail conventionally starts with forging a steel blank of the common rail. Next, cylindrical cavities are machined at each extremity of the rail. The cavities may be threaded for complementary arrangement on one side of a pressure sensor and on the opposite side of a pressure regulator device, such as a passive valve or an electromagnetic controlled valve. Machining the cavities typically also includes forming, in the bottom face of the cavity, a blind end bore with an annular inlet chamfer, which will be used as positioning and/or sealing surface.

The following step includes drilling the rail blank from one of the end cavities towards the other along the main axis of the rail blank to create a longitudinal through bore defining the inner volume that will, in use, receive high pressure fuel. The longitudinal through bore is usually formed by deep hole drilling, for example with a so called gun drill.

In a further step, typically after the machining is completed, the obtained common rail is subjected to autofrettage in order to improve the durability of the fuel rail. As is known in the art, during autofrettage, the common rail is subjected to very high pressure, over material yield stress, causing internal portions of the rail to yield plastically, resulting in internal compressive residual stresses once the pressure is released. Inducing residual compressive stresses into materials increase their resistance to stress corrosion cracking

A critical aspect of the deep drilling is the axial alignment of the longitudinal through bore. In practice, the longitudinal through bore is drilled from a first cavity, by axially extending the end bore in the bottom cavity through the length of the rail, to open into the end bore of the opposite, second cavity.

However, it has been observed that in some cases the longitudinal through bore may slightly deviate from the common rail's main axis. For example, in certain applications like heavy duty rails, big inner volumes are required, involving a longer length of the central cavity, above 400 mm. It has been noticed that at lengths above 400 mm, the gun drilling length axial deviation increased significantly creating uncertainties about the exit area of the gun drill.

Therefore, in long common rails, the classical manufacturing process has a high risk of destroying the end bore chamfer of the second cavity at the exit of the gun drill, or even a risk of affecting the overall shape of the cavity. This is problematic for the autofrettage, which requires inserting high pressure nozzles at both extremities of the common rail, i.e. in the end bores provided at the bottom of the cavities. The nozzles are subject to great forces due to the inner pressure. Good positioning of the nozzles in order to provide optimum sealing relies on uniform and predictable surfaces of the bores. The positioning and sealing of the nozzles is achieved by the inlet chamfer surrounding the end bore at the bottom of the cavities. Destruction or modification of the chamfer affects directly the quality of the sealing of the nozzles and leads to irreversible damages during autofrettage.

### Object of the invention

It is therefore an object of the present invention to provide an improved manufacturing process for common rails, and particularly for common rails with longer length.

### General Description of the Invention

The present invention concerns a method for manufacturing a common rail adapted to be arranged in a fuel injection system, which comprises the steps of:
forging a steel piece to form a rail blank of the common rail having an elongate shape extending along a main axis from a first extremity to a second extremity;
machining the first extremity of said rail blank to form a first cavity defined by cylindrical walls and a bottom face and adapted to complementary receive a device, the machining comprising forming an inner recess at a depth of between 3 to 5 mm under said bottom face, the inner recess being in communication with the first cavity through an intermediate passage opening in the bottom face, an inlet chamfer being machined around the intermediate passage adjacent the bottom face;
machining the second extremity of the rail blank, wherein the rail blank is machined to form a second cavity adapted to complementary receive another device;
drilling the rail blank from the second cavity along the main axis to create a longitudinal through bore having a length greater than 400 mm and a diameter of about 8 to 10 mm in order to form an inner volume receiving, in use, high pressure fuel, the longitudinal through bore being drilled to open into said inner recess; and wherein the diameter ratio of the inner recess with respect to the longitudinal bore is at least 1.4.

The present invention provides a solution to the axial deviation of the deep hole drilling in common rails having a length greater than 400 mm. The inner recess has a diameter greater than the diameter of the longitudinal bore, so that during drilling the longitudinal holes opens into the inner recess. By way of this design, the deep drilling stage does not risk altering the geometry of the inlet chamfer at the first cavity (due to deviation of drilling axis).

The method typically further involves subjecting the common rail body to a step of autoffretage by applying a sealing feature against said inlet chamfer of the transition passage and introducing a very high pressure in the longitudinal bore. Since the geometry of the inlet chamfer at the bottom at the first cavity is preserved, the present invention further eliminates the risk of damaging or breaking the sealing feature during autofrettage step that is conventionally carried out after the various machining steps of the common rail body.

### Brief Description of the Drawings

Further details and advantages of the present invention will be apparent from the following detailed description of not limiting embodiments with reference to the attached drawings, wherein:
- Fig. 1: is a front view of a common rail according to a preferred embodiment of the invention;
- Fig. 2: is a cross-section view along the line 2-2 in Fig. 1;
- Fig. 3: is a view of the detail 3 of Fig. 2, showing a first embodiment of the inner recess of the common rail of Fig. 1; and
- Fig. 4: is a view of the detail 4 of Fig. 3.

### Description of Preferred Embodiments

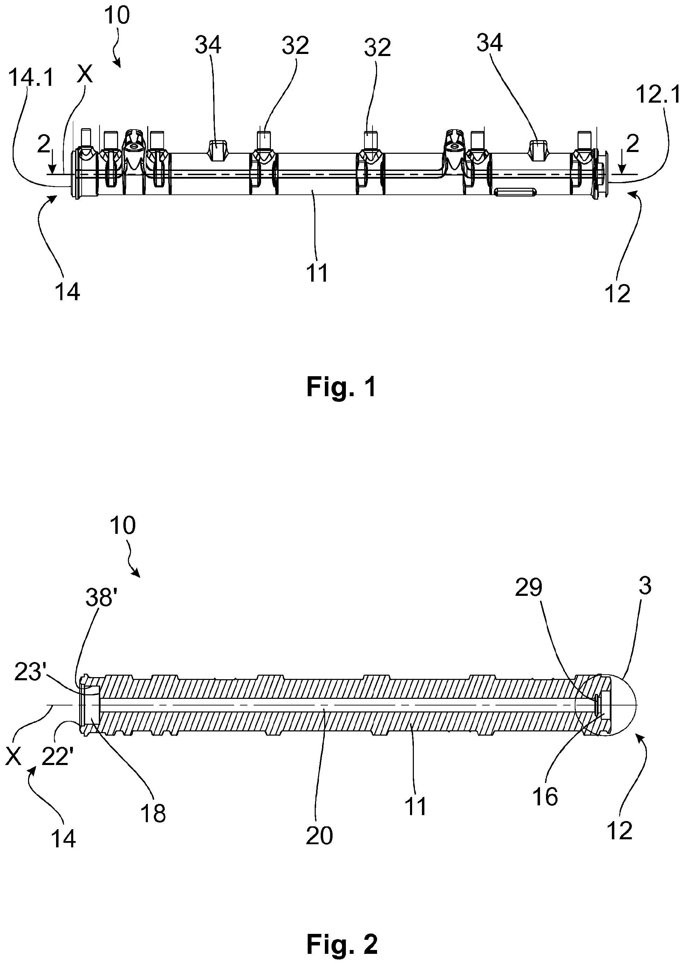

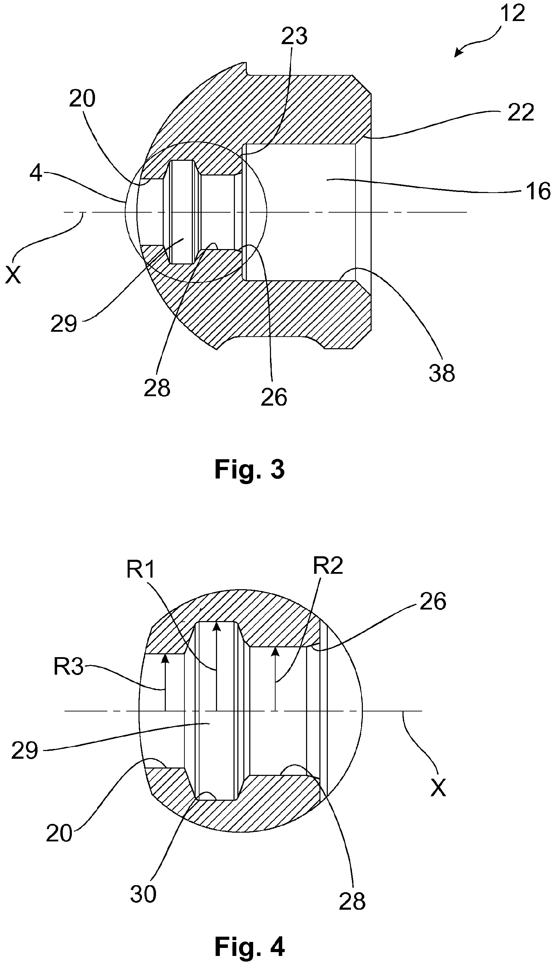

A shown in Figs. 1 to 4, a common rail 10 comprises, in a first embodiment, an elongated tubular body 11 extending along a main axis X from a first extremity 12, on the right of the figure, to a second extremity 14, on the left of the figure. In the context of the present invention, the common rail body has a length greater than 400 mm.

Externally, the rail 10 is conventionally provided with protrusions 32 distributed along the length of the rail body between the extremities 12 and 14. Each of the protrusions 32 has a radially extending (relative to axis X) high pressure channel, not shown, adapted to flow high pressure fuel either entering the rail or exiting the rail towards fuel injectors. The protrusions 32 may be typically externally threaded for fixing high pressure pipes.

The rail 10 is also typically provided with fixation tabs 34, each having a fixation hole, not shown, to enable fixation with bolt screwed, for instance, in an engine block.

Internally, the common rail 10 comprises a first cavity 16 at the first extremity 12, a second cavity 18 at the second extremity 14, and a longitudinal through bore 20 defining an inner volume receiving, in use, high pressure fuel, and creating a fluidic connection between the first and second cavities 16, 18. The common rail 10 further comprises internal radial passages, not visible in Fig.2, to allow communication between the bore 20 and holes in the protrusions 32.

The first cavity 16 is a cylindrical cavity coaxial with the main axis X, adapted to complementary receive a device, not shown. The first cavity 16 comprises lateral walls with an outer chamfer 22 and a bottom face 23. Reference sign 28 designates an intermediate passage 28, preferably a bore coaxial with the main axis X, open at one end in the bottom face 23 and at the other end into an inner recess 29. A chamfer 26 is arranged at the inlet of the intermediate passage 28, adjacent the bottom face 23. As explained in detail below, the diameter of the inner recess 29 is larger than that of the intermediate passage 28 and of the longitudinal bore 20, respectively.

The second cavity 18 is a cylinder cavity disposed opposite to the first cavity 16 and generally coaxial with the main axis X, adapted to complementary receive another device, not shown.

In use, external add-on devices, like a pressure sensor, or a pressure valve, not shown, may be plugged or inserted in the cavities of the common rail. For example the pressure sensor may be inserted in the first cavity 16 and the pressure valve may be inserted in the second cavity 18.

The manufacturing method of the common rail 10 will now be described. The manufacturing typically starts with a forging step in order to provide a forged rail blank of the common rail, wherein a steel rod is transformed into a forged rail blank. Steel, in particular micro-alloyed steel, is conventionally used for the rail blank, although other materials having appropriate mechanical properties for use as common rail may be employed. Conventionally, the forged rail blank may be subjected to cooling so that the material's mechanical properties are similar to those of tempered steel. The obtained rail blank has the general elongate shape seen in Fig.1, extending along main axis X between both extremities 12 and 14.

Upon forging and cooling, the rail blank undergoes machining and drilling stages, both internally and externally, to provide the various internal volumes and other desired functionalities.

The rail blank is e.g. first machined to create end faces 12.1 and 14.1, as shown in Fig. 1, at the first and second extremities 12 and 14. These end faces 12.1 and 14.1 are preferably perpendicular to the main axis X and obtained, e.g., by mill machining.

Then, the first extremity 12 is machined to form the first cavity 16 from the first end face 12.1. This may be done e.g. by first drilling a preparatory hole centered on the main axis X followed by boring the first cavity 16.

The cavity boring may start with a tilted surface for an annular outer chamfer 22, then the boring head is moved in axial direction (X) to form a straight lateral bore surface 38 of the first cavity 16. At the bottom of the cavity, a flat bottom face 23 is formed.

The machining of the first extremity may include providing a thread for the purpose of connecting an add-on device. The bottom face 23 and the inner chamfer 26 may serve as positioning surfaces for a high-pressure sensor sealing surface.

The first extremity machining further includes machining the intermediate passage 28 in axial continuation of the first cavity 16 together with its inlet chamfer 26. The intermediate passage 28 has a diameter equal to the inner diameter of the inner chamfer 26 and creates an extension of the first cavity 16 in the rail 10 along the main axis X. The intermediate passage 28 has a predetermined length, typically between 3 and 5 mm, to ensure a sufficient wall thickness/rigidity separating the first cavity 16 from the inner recess 29.

The inner recess 29 is then preferably machined by enlarging the inner end portion of the intermediate passage 28. One may use any suitable technique to machine the inner recess with a diameter larger than that of the intermediate passage 28 and of the longitudinal bore 28, respectively. For example, the inner recess 29 is obtained by machining a groove 30 radially around the inner end portion of the intermediate passage 28. That is, the groove 30 is preferably machined over a predetermined portion of the length of the intermediate passage 28, while keeping an inlet section of the intermediate passage 28 untouched. In effect, intermediate passage 28 provides a fluidic connection between the first cavity 16 and the groove 30. At this fabrication stage, the inner recess 29 is only open towards the intermediate passage 28.

Machining the groove 30 may be realized for example with an internal groove machining tool by means of a lathe.

The groove 30 may have any suitable sectional shape (i.e. the cross-section along the main axis - as seen in the plane of the drawing sheet), and may have a continuous cross-section of revolution in the shape of a U or V, or squared or arc-shaped.

The manufacturing process further includes machining the second extremity. The second cavity 18 is machined from the end face 14.1 at the second extremity 14, in the direction of the main axis X, coaxial with the first cavity 16. The second cavity 18 includes the same features as the first cavity 16, and this step is similar to the step of machining the first cavity. That is, the second cavity 18 is cylindrical with a straight lateral bore 38' surface having an inlet chamfer 22' and ending in a flat bottom face 23'.

The second cavity 14 may also be provided with a thread (not shown) in cylindrical surface 38', for later use in positioning or sealing an add-on device.

Upon machining the two extremities, the rail blank is ready for deep hole drilling. In some common rails designs, the longitudinal through bore here exceeds a length of 400 mm for a diameter of between 8 and 10 mm. Regular drills cannot provide such an aspect ratio for a through bore and are usually replaced with so called gun drills.

The gun drill is inserted into the second cavity 18 and the drilling is performed from the bottom face 23' towards the first extremity 12, along the main axis X. It shall be appreciated here that the drilling is performed until the gun drill reaches the inner recess 29. The longitudinal through bore 20 is thus obtained, extending from the second cavity 18 to the inner recess 29 connected to the first cavity 16.

Gun drilling provides a very high aspect ratio but may deviate from the initial drilling axis for a long hole exceeding 400 mm. That is, the exit area of the gun drill is only known inside a certain margin of error. The inner recess 29 is provided to form an exit region of the gun drill. The radial extension of the inner recess 29 is predetermined so that the gun drill falls within the inner recess 29, taking into account the inherent deviation during the gun drilling operation.

In practice, this implies that the inner recess 29 has a radius R₁ that is larger than the radius R₂ of the intermediate passage 28 and larger than the radius R₃ of the longitudinal bore 20.

For example, the ratio R₁/R₃ may lie between 1.2 and 2, typically above 1.4 or 1.6. A similar ratio may be provided for R₁/R₂.

To finally obtain the shape of the common rail as shown in Fig. 1, the skilled person will understand that the manufacturing process may comprise further machining steps that are not described in the context of the invention like for example steps of waist mill machining, or steps leading to the creation of radial high pressure inlets or outlets etc.

Once the machining and drilling operations are finished, the obtained rail body 11 is typically subjected to autofrettage in order to strengthen the rail body. Autofrettage typically involves a first sealing step during which the opening of the intermediate passage 28 into the bottom face of the first cavity 16 is sealed with a sealing feature, not shown, and a machine nozzle, not shown, is applied at the second extremity 14. Then in a pressurized step, an autofrettage fluid is injected at high pressured into the rail.

The sealing feature is usually designed as a plug so that when it is engaged in the first extremity 12 of the rail, the sealing feature contacts the rail body 11 only at the inner chamfer 26. The first transverse face and the outer chamfer 22 are not in contact with the sealing feature and therefore cannot be damaged by the latter feature.

The machine nozzle is designed similarly to the sealing feature to slightly engage in the inlet portion of the longitudinal bore 20 at the second cavity 18, generally engaging a chamfer, not shown, surrounding the inlet of the longitudinal bore 20 at the interface with the bottom face 23'.

After the first sealing step is performed, a pressurizing step is operated, during which an autofrettage fluid AF injected in the rail, via the nozzle, is pressurized to pressures that are typically over material yield strength or between material yield and tensile strength. This pressurizing step takes a few seconds, the fluid pressure and the duration being adjusted as per the rail geometry and required characteristics.

During the pressurizing step, a substantially axial force, as required for sealing purposes, is applied to the sealing feature and to the machine nozzle.

Thanks to the present manufacturing method, the deep drilling stage does not alter the geometry of the inner chamfer 26 at the first cavity, eliminating the risk of damaging or breaking the sealing feature during the autofrettage step.

The present fuel rail 10 design is developed for fuel rails with a length of about 400 to 950 mm. The first cavity 16 may be an M18 cavity and the second cavity 18 may be M24. The diameter of the longitudinal bore 20 is between 8 and 10 mm, for a length greater than 400 mm.

## Claims

1. A method for manufacturing a common rail (10) adapted to be arranged in a fuel injection system, the method comprising the steps of:
forging a steel piece to form a rail blank of the common rail having an elongate shape extending along a main axis (X) from a first extremity (12) to a second extremity (14);
machining the first extremity (12) of said rail blank to form a first cavity (16) defined by cylindrical walls and a bottom face (23) and adapted to complementary receive a device, said machining comprising forming an inner recess (29) at a depth of between 3 to 5 mm under said bottom face, said inner recess (29) being in communication with said first cavity (16) through an intermediate passage (28) opening in said bottom face, an inlet chamfer being machined around said intermediate passage (28) adjacent said bottom face (23);
machining the second extremity (14) of said rail blank, wherein said rail blank is machined to form a second cavity (18) adapted to complementary receive another device;
drilling said rail blank from said second cavity (18) along said main axis (X) to create a longitudinal through bore (20) having a length greater than 400 mm and a diameter of about 8 to 10 mm in order to form an inner volume receiving, in use, high pressure fuel, said longitudinal through bore (20) being drilled to open into said inner recess (29);
wherein the diameter ratio of the inner recess (29) with respect to the longitudinal bore (20) is at least 1.4.

2. The method for manufacturing a common rail (10) according to claim 1, wherein the common rail body is subjected to a step of autofrettage by applying a sealing feature against said inlet chamfer (26) of said transition passage (28) and introducing a very high pressure in the longitudinal bore (20).

## Patentansprüche

1. Verfahren zur Herstellung einer gemeinsamen Leitung bzw. eines Common-Rail (10), die/der zur Anordnung in einem Kraftstoffeinspritzsystem ausgebildet ist, wobei das Verfahren die Schritte aufweist:
Formen eines Stahlstücks, um einen Rail-Rohling des Common-Rail mit einer länglichen Form zu bilden, der sich entlang einer Hauptachse (X) von einem ersten Ende (12) zu einem zweiten Ende (14) erstreckt;
Bearbeiten des ersten Endes (12) des Rail-Rohlings, um einen ersten Hohlraum (16) zu bilden, der durch zylindrische Wände und eine Unterseite (23) definiert ist und ausgebildet ist zum komplementären Aufnehmen einer Vorrichtung, wobei das Bearbeiten ein Bilden einer inneren Aussparung (29) an einer Tiefe zwischen 3 und 5 mm unter der Unterseite aufweist, wobei die innere Aussparung (29) mit dem ersten Hohlraum (16) durch einen in der Unterseite mündenden Zwischendurchlass (28) in Verbindung ist, wobei eine Einlassfase um den Zwischendurchlass (28) herum angrenzend an die Unterseite (23) ausgearbeitet wird;
Bearbeiten des zweiten Endes (14) des Rail-Rohlings, wobei der Rail-Rohling bearbeitet wird, um einen zweiten Hohlraum (18) zu bilden, der ausgebildet ist zum komplementären Aufnehmen einer anderen Vorrichtung;
Bohren des Rail-Rohlings von dem zweiten Hohlraum (18) entlang der Hauptachse (X), um eine Längsdurchgangsbohrung (20) mit einer Länge von mehr als 400 mm und einem Durchmesser von etwa 8 bis 10 mm zu erzeugen, um ein Innenvolumen zum Aufnehmen, in Betrieb, von Hochdruckkraftstoff zu bilden, wobei die Längsdurchgangsbohrung (20) gebohrt wird, um in die innere Aussparung (29) zu münden;
wobei das Durchmesserverhältnis der inneren Aussparung (29) in Bezug auf die Längsbohrung (20) zumindest 1,4 beträgt.

2. Das Verfahren zur Herstellung eines Common-Rail (10) gemäß Anspruch 1, wobei der Common-Rail-Körper einem Autofrettage-Schritt unterzogen wird, indem ein Dichtungsmerkmal gegen die Einlassfase (26) des Übergangsdurchlasses (28) aufgebracht und ein sehr hoher Druck in die Längsbohrung (20) eingebracht wird.

## Revendications

1. Procédé de fabrication d'une rampe commune (10) prévue pour être disposée dans un système d'injection de carburant, le procédé comprenant les étapes suivantes:
forgeage d'une pièce d'acier pour former une ébauche de rampe de la rampe commune ayant une forme allongée s'étendant le long d'un axe principal (X) depuis une première extrémité (12) jusqu'à une deuxième extrémité (14);
usinage de la première extrémité (12) de ladite ébauche de rampe pour former une première cavité (16) définie par des parois cylindriques et une face inférieure (23) et prévue pour recevoir par complémentarité un dispositif, ledit usinage comprenant le formage d'un renfoncement intérieur (29) à une profondeur comprise entre 3 et 5 mm en dessous de ladite face inférieure, ledit renfoncement intérieur (29) étant en communication avec ladite première cavité (16) par le biais d'un passage intermédiaire (28) débouchant dans ladite face inférieure, un chanfrein d'entrée étant usiné autour dudit passage intermédiaire (28) en position adjacente à ladite face inférieure (23);
usinage de la deuxième extrémité (14) de ladite ébauche de rampe, ladite ébauche de rampe étant usinée pour former une deuxième cavité (18) prévue pour recevoir par complémentarité un autre dispositif;
perçage de ladite ébauche de rampe à partir de ladite deuxième cavité (18) le long dudit axe principal (X) pour créer un alésage traversant longitudinal (20) ayant une longueur supérieure à 400 mm et ayant un diamètre d'environ 8 à 10 mm afin de former un volume intérieur recevant du carburant à haute pression pendant l'utilisation, ledit alésage traversant longitudinal (20) étant percé de manière à s'ouvrir dans ledit renfoncement intérieur (29);
le rapport de diamètre du renfoncement intérieur (29) à l'alésage longitudinal (20) étant d'au moins 1,4.

2. Procédé de fabrication d'une rampe commune (10) selon la revendication 1, dans lequel le corps de rampe commune est soumis à une étape d'auto-frettage par application d'un moyen de scellage contre ledit chanfrein d'entrée (26) dudit passage de transition (28) et par introduction d'une très haute pression dans l'alésage longitudinal (20).
